# EUROPÄISCHE PATENTSCHRIFT

(11) **EP 3 012 931 B1**
(45) Veröffentlichungstag und Bekanntmachung des Hinweises auf die Patenterteilung: **11.04.2018**
(21) Anmeldenummer: 15189383.1
(22) Anmeldetag: 12.10.2015
(51) Int. Cl.: H02G 3/10, H02G 3/00

(54) **TRÄGER FÜR ELEKTROINSTALLATIONEN**
HOLDER FOR ELECTRICAL INSTALLATIONS
SUPPORT POUR INSTALLATIONS ELECTRIQUES

(30) Priorität: 13.10.2014 CH 15562014
(43) Veröffentlichungstag der Anmeldung: 27.04.2016
(73) Patentinhaber: Morach, Christoph, 8335 Hittnau (CH)
(72) Erfinder: MORACH, Christoph, 8335 Hittnau (CH)
(74) Vertreter: Frei Patent Attorneys

(56) Entgegenhaltungen:
- EP-A2- 2 367 251
- EP-A2- 2 525 459
- CH-A2- 703 418
- US-A1- 2011 005 799
- Agro: "Teleskop-Geräteträger", , 31. Dezember 2011 (2011-12-31), XP055192606, Gefunden im Internet: URL:http://www.agro.ch/website/media/agro_ pdf_neu/Flyer_Teleksoptraeger_de_web.pdf [gefunden am 2015-06-01]

## Beschreibung

Die Erfindung bezieht sich auf das Gebiet der Installationstechnik und insbesondere auf einen Träger für Elektroinstallation gemäss dem Oberbegriff Patentanspruches 1.

EP 2367251 zeigt einen Träger für Elektroinstallationen, welcher einen an einer Wand oder einer Schaltafel befestigbaren Sockel mit einem Führungsrohr, sowie einen Aufsatz, der mittels einer Aufstecköffnung des Aufsatzes am Führungsrohr montierbar ist, aufweist. Der Sockel weist beispielsweise zwei Rohranschlüsse zum seitlichen Einführen von Elektrokabeln in das Führungsrohr auf. Dabei ist ein Übergang zwischen dem Rohranschluss und dem Führungsrohr durch einen Rohrbogen gebildet. Durch den Träger wird eine zeitsparende Montage von Installationsrohren und später von Elektrokabeln ermöglicht. Es ist jedoch besondere Vorsicht geboten, die verschiedenen Elektrokabel welche durch die beiden Rohranschluss in den Träger eingeführt werden können nicht zu verwechseln oder zu vertauschen.

Es ist deshalb Aufgabe der Erfindung, einen Träger für Elektroinstallation der eingangs genannten Art zu schaffen, welche die oben genannten Nachteile behebt.

Diese Aufgabe löst ein Träger für Elektroinstallationen mit den Merkmalen des unabhängigen Patentanspruchs.

Der Träger weist einen an einer Wand oder einer Schaltafel befestigbaren Sockel und einen Aufsatz auf. Der Sockel ist an einer Wand oder einer Schaltafel befestigbar und weist ein Basiselement, mindestens ein hohles Führungsrohr und mindestens zwei Anschlusskanäle zur Aufnahme je eines Installationsrohres und/oder eines Elektrokabels auf. Das Führungsrohr erstreckt sich von einem Basisbereich zu einem Aufsatzbereich entlang einer Führungsrohrachse. Eine Längsachse von je einem Anschlusskanal schliesst mit der Führungsrohrachse einen Winkel ein. Der Aufsatz ist im Aufsatzbereich am Führungsrohr befestigbar und weist dazu eine Aufsatzöffnung auf, d.h. der Aufsatz ist mittels der Aufsatzöffnung am Führungsrohr montierbar. Zwischen je einem Anschlusskanal und dem Führungsrohr ist je ein Rohrübergang ausgebildet. Des Weiteren ist entlang der Führungsrohrachse mindestens eine Zwischenwand im Führungsrohr ausgebildet, wobei die mindestens eine Zwischenwand das Führungsrohr in mindestens zwei Führungskammern unterteilt. Die Führungskammern sind entlang der Führungsrohrachse ausgebildet und verlaufen im Wesentlichen parallel zur Führungsrohrachse.

Das Führungsrohr kann als hohles Rohr mit einer Aussenwand ausgebildet sein, das mindestens im Aufsatzbereich offen ist. Es kann im Basisbereich geschlossen oder offen sein. Das Führungsrohr kann einen beliebigen Querschnitt aufweisen. Der Querschnitt senkrecht zur Führungsachse kann im Wesentlichen kreisförmig, oval, dreieckig, rechteckig, polygon, oder unregelmässig ausgebildet sein. Es ist auch möglich, dass der Querschnitt entlang der Führungsachse variiert und nicht konstant ist. Der Querschnitt kann so ausgebildet sein, dass eine Biegefestigkeit des Führungsrohrs in mindestens eine Richtung verbessert wird. Dies kann beispielsweise durch einen rechteckigen Querschnitt realisiert werden, wobei die beiden Führungskammern je einen quadratischen Querschnitt ausweisen.

Das mindestens eine Führungsrohr bildet eine durchgängige Rohrverbindung zwischen Sockel und Aufsatz zur Durchführung von Kabeln. Dabei kann die Form der Aufsatzöffnung des Aufsatzes mit dem Querschnitt des Führungsrohrs im Aufsatzbereich korrespondieren.

Ein Installationsrohr kann am Anschlusskanal seitlich am Sockel anschliessbar sein, so dass Elektrokabel durch das Installationsrohr und den Anschlusskanal über den Rohrübergang in eine Führungskammer des Führungsrohrs führbar sind. Damit wird es insbesondere möglich, Elektrokabel durch ein bereits in den Träger eingestecktes Installationsrohr hindurchzustossen. Der Installationsaufwand zum Verlegen von Installationsrohren und Elektrokabeln kann dadurch insgesamt verringert werden. Ausserdem können die Elektrokabel, die durch die verschiedenen Führungskammern geführt werden können, am Aufsatz bzw. im Aufsatzbereich voneinander unterschieden werden, wodurch die Installation von elektronischen Geräten im oder am Aufsatz erleichtert wird.

Der Träger kann so ausgestaltet sein, dass ein erster Anschlusskanal in eine erste Führungskammer und ein zweiter Anschlusskanal in eine zweite Führungskammer übergeht. Dadurch wird es möglich, dass Elektrokabel die über den ersten Anschlusskanal hindurchgestossen werden in die erste Führungskammer zum Aufsatz geführt und Elektrokabel die über den zweiten Anschlusskanal hindurchgestossen werden in die zweite Führungskammer zum Aufsatz geführt werden. Auf diese Weise kann die Installation von Elektrodosen oder ähnlichen Vorrichtung erleichtert werden, da eine Unterscheidung der Elektrokabel ohne weitere Kennzeichnung ermöglicht wird. Gemäß der Erfindung weist der Sockel ein Umlenkelement, zum Umlenken von einsetzbaren Elektrokabeln, auf. Das Umlenkelement kann im Basisbereich angeordnet sein. Das Umlenkelement ermöglicht es, dass Elektrokabel, welche über einen der Anschlusskanäle hindurchgestossen werden, über den Rohrübergang in eine der Führungskammern umgelenkt werden. Dadurch wird ein Einführen der Elektrokabel in das Führungsrohr erleichtert. Ebenfalls erleichtert wird das Einführen von Elektrokabeln durch den Aufsatzbereich über den Rohrübergang zu einem der Anschlusskanäle.

Das Umlenkelement kann zusammen mit dem Rohrübergang einen Rohrbogen bilden, wobei der Rohrbogen einen Kreisbogen beschreiben kann. Der Kreisbogen kann auch gekappt sein, wodurch ein Radius des Kreisbogens auf die Abmessungen des Sockels angepasst sein kann. Der Kreisbogen kann einen variierenden Radius aufweisen und so eine sich über den Verlauf des Kreisbogens ändernde Krümmung aufweisen.

Das Umlenkelement kann lösbar in den Sockel einsetzbar sein. Durch das herausnehmbare Umlenkelement kann einerseits der Sockel - ohne das Umlenkelement - in (Spritz)Gusstechnik besonders einfach, insbesondere einstückig hergestellt werden.

In einer alternativen Ausführungsform der Erfindung ist der Sockel nicht zur Aufnahme eines Umlenkelementes vorgesehen, sondern aus zwei (vorzugsweise im wesentlichen symmetrischen) Hälften zusammengesetzt, wobei eine Schnittlinie zwischen diesen Hälften entlang der Führungsrohrachse verläuft. Gemäß der Erfinderung sind das Umlenkelement und die Zwischenwand einstückig ausgebildet wodurch die Führung und Umlenkung des Elektrokabels vom Anschlusskanal in eine spezifische, korrespondierende Führungskammer garantiert werden kann. Die Zwischenwand kann in einem Führungselement im Führungsrohr geführt sein. Gemäß der Erfindung sind die Zwischenwand und das Führungsrohr einstückig ausgebildet. Auf diese Weise kann bei einem Ablängen des Führungsrohrs die Ablängung der Zwischenwand im gleichen Masse erleichtert werden.

Der Winkel zwischen der Längsachse eines Anschlusskanals und der Führungsrohrachse kann im Wesentlichen 90° betragen. Der Übergang zwischen dem Anschlusskanal und dem Führungsrohr ist auf der Innenseite so geformt, dass ein Einführen eines Elektrokabels durch den Anschlusskanal über den Rohrübergang in das Führungsrohr bzw. die zum Anschlusskanal korrespondierende Führungskammer ohne Schwierigkeiten durchgeführt werden kann. Mit anderen Worten: Der Winkel zwischen der Längsachse eines Anschlusskanals und der Führungsrohrachse ist kein sehr spitzer Winkel, bei dem das Einführen eines Elektrokabels behindert wird.

Der Anschlusskanal kann so ausgebildet sein, dass Installationsrohre mit verschiedenen Aussendurchmessern am Anschlusskanal befestigbar sind.

Der Träger kann an einer Wand montiert werden, wobei anschliessend Isolationsmaterial um den Träger angebracht wird, so dass der Aufsatz an der Aussenseite der isolierten Wand liegt. Alternativ kann der Halter auch in eine Wand einbetoniert sein, so dass der Aufsatz bündig zu der Aussenseite der Betonwand liegt. Dazu wird der Träger vor dem Betonieren an der Innenseite einer Schaltafel befestigt, wobei der Aufsatz an der gegenüberliegenden Schaltafel anliegt.

Die Zwischenwand kann so ausgebildet sein, dass ein direktes Durchstossen von Elektrokabeln von einem Anschlusskanal in einen weiteren Anschlusskanal verhindert wird. Mit anderen Worten: die Zwischenwand kann so ausgebildet sein, dass ein direkter Übergang von einem ersten Anschlusskanal zu einem zweiten Anschlusskanal blockiert ist. Auf diese Weise kann der erste Anschlusskanal vollständig von dem zweiten Anschlusskanal getrennt werden.

In einer Ausführungsform schliesst sich das Umlenkelement im Wesentlichen ohne Unstetigkeiten an die Zwischenwand im Inneren des Führungsrohrs an. So kann ein Elektrokabel ohne Hindernis durch einen Anschlusskanal und einen entsprechenden Rohrübergang in die entsprechende Führungskammer gestossen werden, oder in umgekehrter Richtung durch eine Führungskammer und entsprechenden Rohrübergang in den entsprechenden Anschlusskanal.

Das Basiselement spannt eine Basisebene auf, wobei die Basisebene im Wesentlichen senkrecht zur Führungsrohrachse ausgerichtet sein kann. Die Basisebene kann im Wesentlichen parallel zu einer Wand oder Schaltafel verlaufen an der der Träger montiertbar ist.

Die Anschlusskanäle können im Wesentlichen parallel zur Basisebene ausgerichtet sein. Dadurch können die am Anschlusskanal befestigbare Installationskabel parallel zur Wand bzw. zur Schaltafel verlegt werden, wodurch ein ordentliches und strukturiertes Arbeiten ermöglicht werden kann.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: perspektivische Ansicht eines Sockels mit Aufsatz;
- Figur 2: perspektivische Ansicht eines Sockels ohne Aufsatz und mit einer sichtbaren Zwischenwand;
- Figur 3: Draufsicht auf verschiedene Ausführungsformen des Sockels;
- Figur 4: Querschnitt eines Träges mit einem Sockel und einer im Führungsrohr einstückig ausgebildeten Zwischenwand;
- Figur 5: perspektivische Ansicht eines Umlenkelements aus Figur 4;
- Figur 6: Querschnitt eines Träges mit einem Sockel und einer im Führungsrohr eingesteckten Zwischenwand;
- Figur 7: perspektivische Ansicht eines Umlenkelements aus Figur 6;
- Figur 8: Draufsicht auf einen Sockel mit eingesetztem Umlenkelement; und
- Figur 9: Draufsicht auf einen Sockel wie in Figur 8 gezeigt mit einem zusätzlichen Halteelement.

Grundsätzlich sind in den Figuren gleiche oder analoge Teile mit gleichen Bezugszeichen versehen.

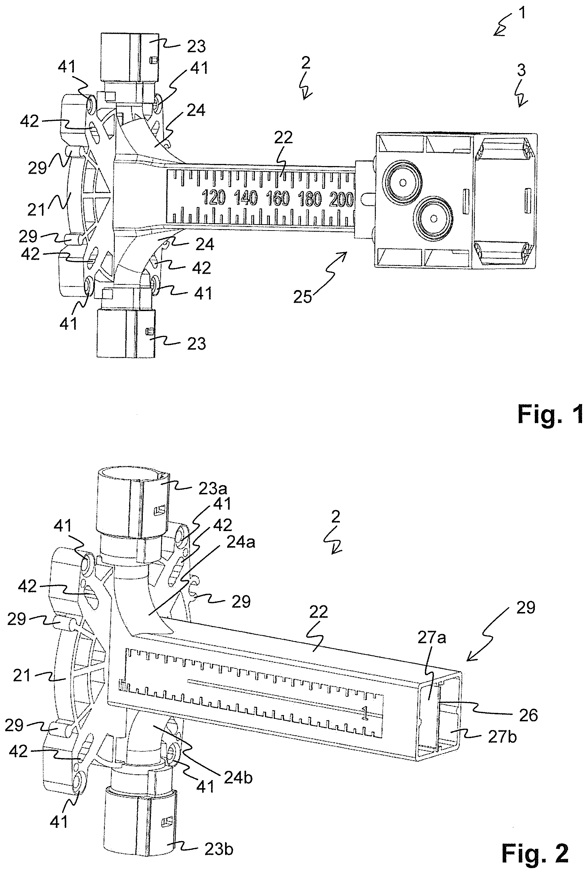

**Figur 1** zeigt eine perspektivische Ansicht eines Sockels 2 mit Aufsatz 3, wobei der Aufsatz 3 beispielsweise eine Gerätedose oder eine Befestigungsplatte sein kann. Der Sockel 2 weist ein Basiselement 21, zwei Anschlusskanäle 23 und ein Führungsrohr 22 auf. Der Übergang von je einem Anschlusskanal 23 zum Führungsrohr 22 wird durch einen Rohrübergang 24 gebildet. Der Aufsatz 3 ist in einem Aufsatzbereich am Führungsrohr 22 befestigt, wobei sich das Führungsrohr 22 entlang einer Führungsrohrachse von einem Basisbereich zu einem Aufsatzbereich erstreckt.

Das Basiselement 21 spannt eine Basisebene auf, die im Wesentlichen senkrecht zur Führungsrohrachse ausgerichtet ist. Die Basisebene kann im Wesentlichen parallel zu einer Wand oder Schaltafel verlaufen, an der der Träger montierbar ist.

Die beiden Anschlusskanäle 23 sind so ausgerichtet, dass zum einen eine Längsachse jeweils eines Anschlusskanals 23 einen Winkel von im Wesentlichen 90° mit der Führungsrohrachse einschliesst. Zum anderen sind die Längsachsen der beiden Anschlusskanäle 23 im Wesentlichen parallel zueinander in der Basisebene versetzt angeordnet. Jeder Anschlusskanal 23 weist eine Anschlussöffnung auf, über welche ein Installationsrohr mit verschiedenen Durchmessern am Anschlusskanal 23 befestigbar ist. Die Anschlussöffnungen der beiden Anschlusskanäle 23 sind einander entgegengesetzt ausgerichtet.

Das Basiselement 21 weist zusätzlich Kupplungselemente 29 auf, mit welchen das Basiselement 21 an ein weiteres Basiselement 21 eines weiteren Sockels 2 ankoppelbar ist. Im angekoppelten Zustand liegt ein vorgegebener Abstand zwischen den Führungsrohren 22 der beiden Sockel 2 vor. Dadurch sind zwei Sockel 2 seitlich aneinander ankoppelbar und die Distanz zwischen den Führungsrohren 22 in seitlicher Richtung wird definiert, wodurch auch der Abstand zwischen den Aufsätzen definiert werden kann. Es ist daher möglich, zwei oder mehr Aufsätze 3 präzise nebeneinander zu positionieren. Die Führungsrohre 22 sind nach dem Aneinanderkoppeln der Sockel 2 parallel zueinander ausgerichtet.

Das hohle Führungsrohr 22 ist im Wesentlichen senkrecht zur Basisebene angeordnet. Das Führungsrohr 22 und das Basiselement 21 können einstückig, beispielsweise aus einem Kunststoff, hergestellt werden. Das Führungsrohr 22 weist einen quadratischen Querschnitt auf. Der Querschnitt des Führungsrohrs 22 kann jedoch auch eine beliebige Form, beispielsweise kreisförmig, oval, dreieckig, rechteckig, polygon, oder unregelmässig, aufweisen.

Ein Übergang zwischen einem Anschlusskanal 23 und dem Führungsrohr 22 wird durch einen Rohrübergang 24 gebildet. Der Rohrübergang 24 ist als Rohrbogen ausgestaltet und erleichtert das Führen von Elektrokabeln, welche über das am Anschlusskanal 23 befestigte Installationsrohr in das Führungsrohr 22 eingeschoben werden können.

Der Aufsatz 3 ist im Aufsatzbereich am Führungsrohr 22 befestigt und weist eine Aufsatzöffnung 25 auf, d.h. der Aufsatz 3 ist mittels der Aufsatzöffnung am Führungsrohr 22 montierbar. Die Befestigung des Aufsatzes 3 wird durch die Aufsatzöffnung an der Rückseite des Aufsatzes 3 und der in der Form korrespondierenden Aufsatzbereich des Führungsrohrs 22 gebildet. Der Aufsatz 3 kann eine Schraubenführung für eine optionale Sicherungsschraube bilden, welche dadurch im Aufsatz 3 gehalten ist und gegen oder in das Material des Führungsrohrs 22 gedreht werden kann.

Das Führungsrohr 22 ist auch im Aufsatzbereich, also im Bereich der Aufsatzöffnung, mit Hilfe der Zwischenwand 26 in zwei Führungskammern 27 geteilt (nicht gezeigt).

Typische Masse für einen Sockel 2 sind beispielsweise: Abstand der Führungsbohrungen 10 bis 20 cm; Länge des Führungsrohres 10 bis 20 cm; Breite und Höhe des Führungsrohres 2 bis 4 cm; Anschluss für Installatationsrohre mit einem Durchmesser von 2 oder mehr cm.

Das Basiselement 21 weist Befestigungsaufnahmen 40 auf. Diese sind an den Ecken des Basiselements 21 angeordnet. Die Befestigungsaufnahmen 40 bilden einerseits Löcher zum Befestigen des Sockels 1 an einer Gebäudewand oder einer Schaltafel und andererseits eine Bohrschablone zum Bohren von Löchern an einer Gebäudewand. Es ist möglich verschiedene Arten von Befestigungsaufnahmen 40 zu unterscheiden. Die Befestigungsaufnahmen 40 können als permanente Aufnahme 42 oder als temporäre Aufnahme 41 ausgebildet sein. Die permanente Aufnahme 42 dient zur permanenten Aufnahme eines Befestigungsmittels zur permanenten Befestigung des Sockels 2 an einer Gebäudewand. Die temporäre Aufnahme 41 dient zur Aufnahme eines Befestigungsmittels zur temporären Befestigung des Sockels 2 an einer Schaltafel.

Die temporäre Aufnahme 41 ist so ausgestaltet, dass sie beim Ausschalen herausgerissen werden kann. Dabei kann die temporäre Aufnahme 41 beispielsweise als Hülse ausgeformt sein, die über eine Sollbruchstelle mit dem übrigen Sockel 2 verbunden ist, wobei die Hülse das Befestigungsmittel aufnehmen kann und beim Ausschalen zusammen mit dem Befestigungsmittel aus dem Basiselement herausgerissen werden kann.

Die permanente Aufnahme 42 kann als Bohrschablone zum Bohren von Löchern an einer Gebäudewand verwendet werden, wodurch eine einfache Befestigung des Sockels an der Gebäudewand ermöglicht werden kann.

Für die temporäre Befestigung können beispielsweise Nägel als Befestigungsmittel verwendet werden und zur permanenten Befestigung können beispielsweise Schrauben als Befestigungsmittel Anwendung finden.

**Figur 2** zeigt wie schon Figur 1 eine perspektivische Ansicht des Trägers 1, jedoch ohne aufgesteckten Aufsatz, wodurch der Aufsatzbereich 29 und eine Zwischenwand 26 im Führungsrohr 22 zu erkennen sind. Die Zwischenwand 26 ist durch ein Führungselement 20 im Führungsrohr 22 geführt. Mit Hilfe der Zwischenwand 26 kann das Führungsrohr 22 in zwei Führungskammern 27 unterteilt sein.

Der erste Anschlusskanal 23a geht über einen ersten Rohrübergang 24a in eine erste Führungskammer 27a über und der zweite Anschlusskanal 23b geht über einen zweiten Rohrübergang 24b in eine zweite Führungskammer 27b über. Die erste Führungskammer 27a und die zweite Führungskammer 27b sind parallel zur Führungsrohrachse ausgebildet.

Ein direktes Durchstossen eines Elektrokabels von einem erstem Anschlusskanal 23a in einen zweiten Anschlusskanal 23b wird durch ein Umlenkelement 28 und/oder die Zwischenwand 26 verhindert.

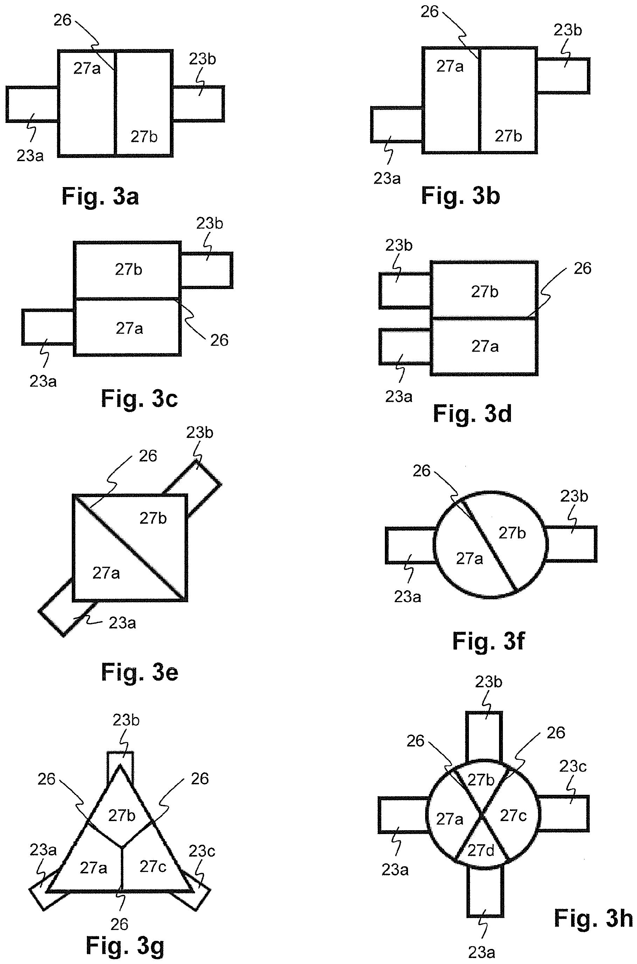

Die **Figuren 3a bis 3h** zeigen eine schematische Draufsicht auf einen Sockel 2, in wobei aus Gründen der Übersicht das Basiselement 21 nicht gezeigt ist. Sie zeigen die Draufsicht vom Aufsatzbereich her entlang der Führungsrohrachse zum Basisbereich, in welchem die Anschlusskanäle 23 im Wesentlichen parallel zur Basisebene und senkrecht zur Führungsrohrachse angeordnet sind. In den Ausführungsformen der Figuren 3a bis 3h blockiert/blockieren die Zwischenwand/Zwischenwände 26 und/oder das Umlenkelement 28 den direkten Übergang von einem ersten Anschlusskanal 23a zu einem zweiten Anschlusskanal 23b.

In Figur 3a sind zwei Anschlusskanäle 23 einander entgegengesetzt angeordnet, dass heisst, dass die Anschlussöffnungen, in die ein Installationsrohr am Anschlusskanal 23 befestigt werden kann, entgegengesetzt zueinander ausgerichtet sind. Der erste Anschlusskanal 23a und der zweite Anschlusskanal 23b sind miteinander fluchtend angeordnet. Die Zwischenwand 26 ist im Wesentlichen senkrecht zu einer gemeinsamen Längsachse der Anschlusskanäle 23 ausgebildet.

In Figur 3b sind Anschlusskanäle 23 einander entgegengesetzt angeordnet. Der erste Anschlusskanal 23a ist versetzt, also nicht fluchtend, zum zweiten Anschlusskanal 23b angeordnet. Die Zwischenwand 26 ist im Wesentlichen senkrecht zu den Längsachsen der Anschlusskanäle 23 angeordnet.

Figur 3c zeigt eine weitere Ausführungsform, wobei die beiden Anschlusskanäle 23 wie in Figur 3b angeordnet sind und die Zwischenwand 26 im Wesentlichen parallel zu den Längsachsen der Anschlusskanäle 23 angeordnet ist.

In Figur 3d sind die Anschlusskanäle 23 parallel zueinander, jedoch in die gleiche Richtung weisend (gleichgerichtet) angeordnet. Die Zwischenwand 26 ist im Wesentlichen parallel zu den Längsachsen der Anschlusskanäle 23 angeordnet.

In Figur 3e sind die Anschlusskanäle 23 entgegengesetzt zueinander an gegenüberliegenden Ecken des viereckigen Führungsrohrs 22 angeordnet. Die Zwischenwand 26 ist im Wesentlichen senkrecht zu den Längsachsen der Anschlusskanäle 23 angeordnet.

Figur 3f zeigt ein im Querschnitt rundes Führungsrohr 22 mit zwei einander entgegengesetzt angeordneten Anschlusskanälen 23. Die Zwischenwand 26 blockiert den direkten Übergang vom ersten Anschlusskanal 23a zum zweiten Anschlusskanal 23b. Die Zwischenwand 26 ist senkrecht oder im Winkel zu einer gemeinsamen Längsachse der Anschlusskanäle 23 ausgebildet.

In Figur 3g ist das Führungsrohr 22 im Querschnitt dreieckig ausgebildet und drei Anschlusskanäle 23 sind je an einer Ecke/Kante angeordnet. Die Zwischenwand 26 ist mit einer Y-Form ausgestaltet, so dass der direkte Übergang von einem Anschlusskanal 23 zu einem der anderen beiden Anschlusskanäle 23 blockiert ist.

Figur 3h zeigt ein im Querschnitt kreisförmiges Führungsrohr 22, an welchem vier Anschlusskanäle 23 angeordnet sind. Der direkte Übergang zwischen den Anschlusskanäle 23 ist durch eine X-förmige Zwischenwand 26 blockiert. Das Führungsrohr 22 wird dadurch in vier Führungskammern 27 unterteilt.

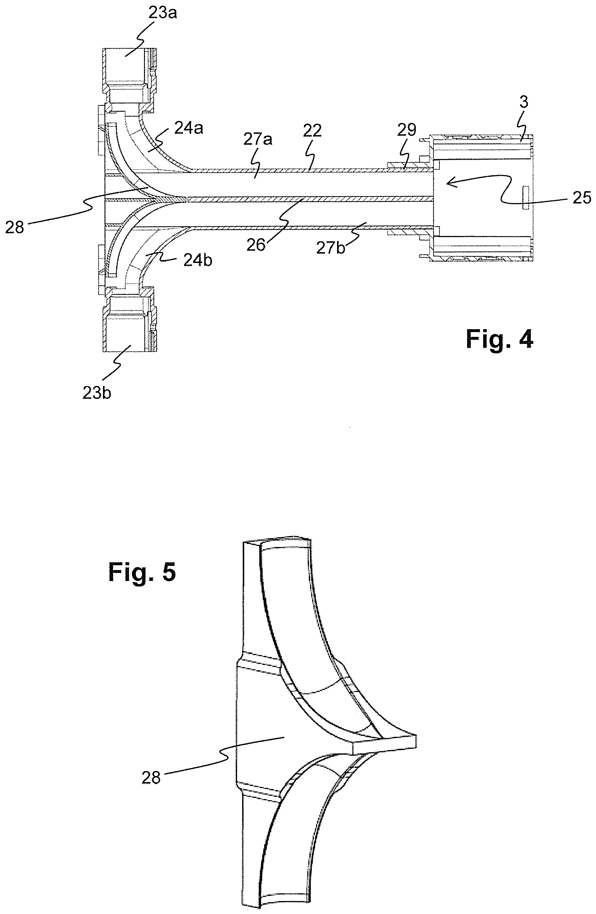

**Figur 4** zeigt einen schematischen Querschnitt eines Trägers mit einem Sockel 2 und einer im Führungsrohr 22 einstückig ausgebildeten Zwischenwand 26. Der Aufsatz 3 ist im Aufsatzbereich des Führungsrohrs 22 befestigt, wobei der Aufsatz 3 den Aufsatzbereich des Führungsrohrs 22 umschliesst.

Der Sockel 2 weist zwei Anschlusskanäle 23 auf, die über je einen Rohrübergang 24 in das Führungsrohr 22 übergehen. Jeder der Rohrübergänge 24 wird mit Hilfe eines Umlenkelements 28 so komplettiert, dass eine Führung eines Elektrokabels vom ersten Anschlusskanal 23a über den ersten Rohrübergang 24a in eine erste Führungskammer 27a und eine Führung eines weiteren Elektrokabels vom zweiten Anschlusskanal 23b über den zweiten Rohrübergang 24b in eine zweite Führungskammer 27b vorliegt.

Ein direktes Durchstossen eines Elektrokabels von einem erstem Anschlusskanal 23a in einen zweiten Anschlusskanal 23b wird durch ein Umlenkelement 28 und/oder die Zwischenwand 26 verhindert.

Die Zwischenwand 26 ist einstückig mit dem Führungsrohr 22 ausgebildet. Das Umlenkelement 28 (im Detail in Figur 5 gezeigt) schliesst sich im Wesentlichen ohne Unstetigkeiten an die Zwischenwand 26 im Inneren des Führungsrohrs 22 an. So kann ein Elektrokabel ohne Hindernis durch ein im ersten Anschlusskanal 23a befestigtes Installationsrohr hindurchgestossen werden und über den ersten Rohrübergang 24a in die erste Führungskammer 27a gestossen werden. Das Elektrokabel kann dann im Aufsatz 3 eindeutig identifiziert und angeschlossen werden.

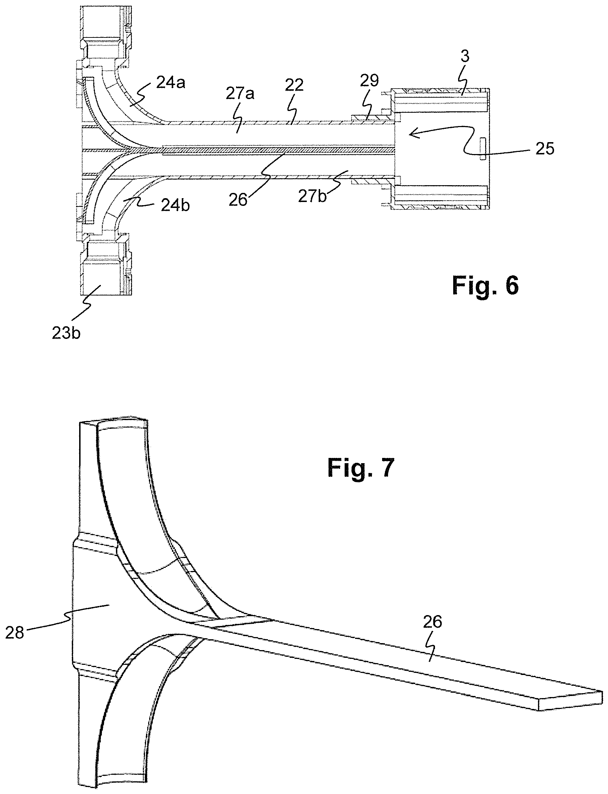

**Figur 6** zeigt wie Figur 4 einen schematischen Querschnitt eines Trägers mit einem Sockel 2 und einem Führungsrohr 22. Die Zwischenwand 26 ist jedoch einstückig mit dem Umlenkelement 28 ausgebildet.

Das Umlenkelement 28 (im Detail in **Figur 7** gezeigt) bzw. die Zwischenwand 26 wird in einem Führungselement 20 in Form von zwei Nuten im Inneren des Führungsrohrs 22 geführt. So kann ein Elektrokabel ohne Hindernis durch ein im ersten Anschlusskanal 23a befestigten Installationsrohr hindurchgestossen werden und über den ersten Rohrübergang 24a in die erste Führungskammer 27a gestossen werden. Das Elektrokabel kann dann im Aufsatz 3 identifiziert und angeschlossen werden.

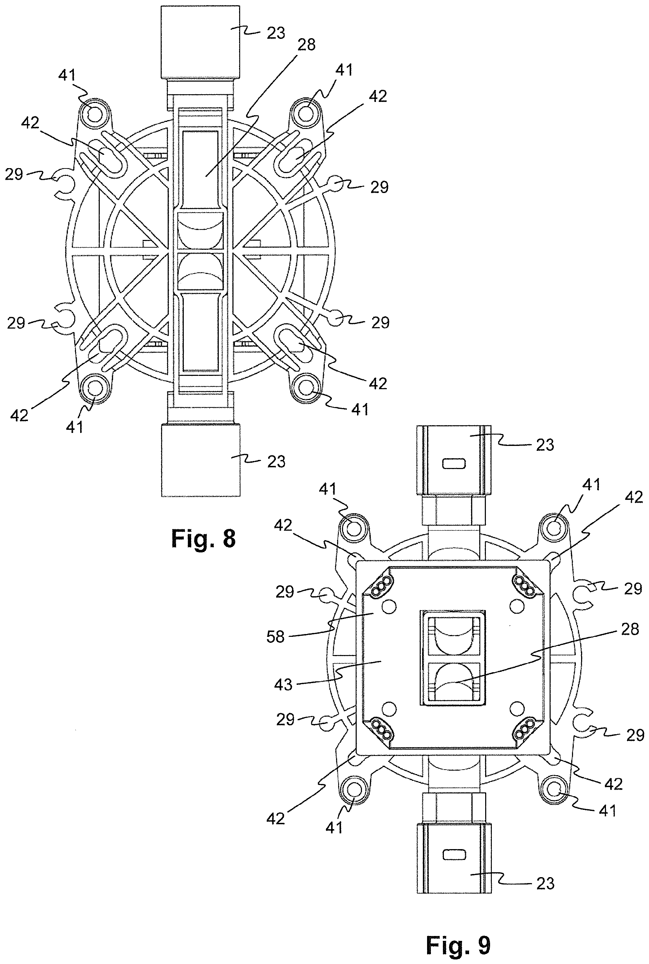

**Figur 8** zeigt eine schematische Draufsicht auf einen Sockel 2 mit einem eingesetzten Umlenkelement 28 auf der dem Führungsrohr 22 abgewandten Seite des Basiselements 21. Das Umlenkelement 28 ist in einem Hohlraum des Sockels 2 eingesetzt und schliesst im Wesentlichen bündig mit der dem Führungsrohr 22 abgewandte Seite des Basiselements 21 ab. Das Umlenkelement 28 kann, wie in **Figur 9** gezeigt, mit Hilfe eines zusätzlichen Halteelements, beispielsweise in Form einer Abdeckplatte 58, im Sockel 2 befestigt werden.

## Patentansprüche

1. Träger für Elektroinstallationen aufweisend
einen Sockel (2) und
einen Aufsatz (3), wobei
der Sockel (2) ein Basiselement (21), mindestens ein Führungsrohr (22) und mindestens zwei Anschlusskanäle (23) zur Aufnahme eines Installationsrohres und/oder eines Elektrokabels aufweist,
wobei sich das Führungsrohr (22) von einem Basisbereich zu einem Aufsatzbereich (29) entlang einer Führungsrohrachse erstreckt,
wobei eine Längsachse je eines Anschlusskanals (23) einen Winkel mit der Führungsrohrachse einschliesst,
wobei der Aufsatz (3) am Führungsrohr (22) im Aufsatzbereich (29) befestigbar ist und dazu eine Aufsatzöffnung (25) aufweist,
wobei je ein Rohrübergang (24) zwischen je einem Anschlusskanal (23) und dem Führungsrohr (22) ausgebildet ist und
**dadurch gekennzeichnet, dass**
mindestens eine Zwischenwand (26) entlang der Führungsrohrachse ausgebildet ist, wobei die mindestens eine Zwischenwand (26) das Führungsrohr (22) in mindestens zwei Führungskammern (27) unterteilt, welche entlang der Führungsrohrachse verlaufen,
wobei der Sockel (2) ein Umlenkelement (28), zum Umlenken von einbringbaren Elektrokabeln, aufweist,
und mindestens eine der folgenden Bedingungen erfüllt ist:
- das Umlenkelement (28) und die mindestens eine Zwischenwand (26) sind einstückig ausgebildet,
- die Zwischenwand (26) und das Führungsrohr sind einstückig ausgebildet.

2. Träger gemäss Anspruch 1, wobei ein erster Anschlusskanal (23a) in eine erste Führungskammer (27a) und ein zweiter Anschlusskanal (23b) in eine zweite Führungskammer (27b) übergeht.

3. Träger gemäss einem der vorherigen Ansprüche, wobei die mindestens eine Zwischenwand (26) einstückig mit dem Führungsrohr (22) ausgebildet ist.

4. Träger gemäss einem der vorherigen Ansprüche, wobei das Umlenkelement (28) lösbar im Sockel (2) einsetzbar ist.

5. Träger gemäss einem der vorherigen Ansprüche, wobei der Sockel (2) aus zwei Hälften zusammengesetzt ist, wobei insbesondere eine Schnittlinie zwischen diesen Hälften entlang der Führungsrohrachse verläuft.

6. Träger gemäss einem der vorherigen Ansprüche, wobei die mindestens eine Zwischenwand (26) so ausgebildet ist, dass ein direkter Übergang von einem ersten Anschlusskanal (23a) zu einem zweiten Anschlusskanal (24b) blockiert ist.

7. Träger gemäss einem der vorherigen Ansprüche, wobei das Umlenkelement (28) sich im Wesentlichen ohne Unstetigkeiten an die Zwischenwand (26) im Inneren des Führungsrohrs (22) anschliesst.

## Claims

1. A carrier for electrical installations comprising
a base (2) and
an attachment (3), wherein
the base (2) comprises a base element (21), at least one guide tube (22) and at least two connection channels (23) for receiving an installation tube and/or an electrical cable,
wherein the guide tube (22) extends along a guide tube axis from a base region to an attachment region (29),
wherein a longitudinal axis of each connection channel (23) encloses an angle with the guide tube axis,
wherein the attachment (3) is fastenable to the guide tube (22) in the attachment region (29) and comprises an attachment opening (25) for this,
wherein a tube transition (24) is formed in each case between a connection channel (23) and the guide tube (22) and
**characterised in that**
at least one intermediate wall (26) is formed along the guide tube axis, wherein the at least one intermediate wall (26) subdivides the guide tube (22) into at least two guiding chambers (27) which run along the guide tube axis,
wherein the socket (2) comprises a deflecting element (28) for deflecting insertable electrical cables,
and at least one of the following conditions is fulfilled:
- the deflecting element (28) and the at least one intermediate wall (26) are designed as one piece,
- the intermediate wall (26) and the guide tube are designed as one piece.

2. A carrier according to claim 1, wherein a first connection channel (23a) merges into a first guiding chamber (27a) and a second connection channel (23b) into a second guiding chamber (27b).

3. A carrier according to one of the preceding claims, wherein the at least one intermediate wall (26) is designed as one piece with the guide tube (22).

4. A carrier according to one of the preceding claims, wherein the deflecting element (28) is releasably insertable in the base (2).

5. A carrier according to one of the preceding claims, wherein the base (2) is composed of two halves, wherein in particular a section line between these halves runs along the guide tube axis.

6. A carrier according to one of the preceding claims, wherein the at least one intermediate wall (26) is designed such that a direct transition from a first connection channel (23a) to a second connection channel (24b) is blocked.

7. A carrier according to one of the preceding claims, wherein the deflecting element (28) connects onto the intermediate wall (26) in the inside of the guide tube (22) essentially without discontinuities.

## Revendications

1. Support pour installations électriques, présentant
un socle (2) et
un appui (3),
le socle (2) présentant un élément de base (21), au moins un tube de guidage (22) et au moins deux canaux de raccordement (23) qui reprennent un tube d'installation et/ou un câble électrique,
le tube de guidage (22) s'étendant le long d'un axe de tube de guidage depuis une partie de base jusqu'à une partie d'appui (29),
l'axe longitudinal de chaque canal de raccordement (23) formant un angle avec l'axe du tube de guidage,
l'appui (3) pouvant être fixé sur le tube de guidage (22) dans la partie d'appui (29) et présentant dans ce but une ouverture d'appui (25),
une transition (24) de tube étant formée entre chaque canal de raccordement (23) et le tube de guidage (22),
**caractérisé en ce que**
au moins une paroi intermédiaire (26) est formée le long de l'axe du tube de guidage, la ou les parois intermédiaires (26) divisant le tube de guidage (22) en au moins deux chambres de guidage (27) qui s'étendent le long de l'axe du tube de guidage,
**en ce que** le socle (2) présente un élément de renvoi (28) qui renvoie des câbles électriques qui peuvent y être insérés et
**en ce qu'**au moins l'une des conditions suivantes est remplie :
- l'élément de renvoi (28) et la ou les parois intermédiaires (26) sont formés d'un seul tenant,
- la paroi intermédiaire (26) et le tube de guidage sont formés d'un seul tenant.

2. Support selon la revendication 1, dans lequel un premier canal de raccordement (23a) se prolonge en une première chambre de guidage (27a) et un deuxième canal de raccordement (23b) en une deuxième chambre de guidage (27b).

3. Support selon l'une des revendications précédentes, dans lequel la ou les parois intermédiaires (26) sont formées d'un seul tenant avec le tube de guidage (22).

4. Support selon l'une des revendications précédentes, dans lequel l'élément de renvoi (28) peut être inséré de manière libérable dans le socle (2).

5. Support selon l'une des revendications précédentes, dans lequel le socle (2) est constitué de l'assemblage de deux moitiés, une ligne de coupe entre ces moitiés s'étendant en particulier le long de l'axe du tube de guidage.

6. Support selon l'une des revendications précédentes, dans lequel la ou les parois intermédiaires (26) sont configurées de manière à bloquer une transition directe du premier canal de raccordement (23a) vers un deuxième canal de raccordement (24b).

7. Support selon l'une des revendications précédentes, dans lequel l'élément de renvoi (28) se raccorde essentiellement sans discontinuité à la paroi intermédiaire (26) à l'intérieur du tube de guidage (22).
